# FASCICULE DE BREVET EUROPEEN

(11) **EP 3 528 134 B1**
(45) Date de publication et mention de la délivrance du brevet: **20.08.2025**
(21) Numéro de dépôt: 19152776.1
(22) Date de dépôt: 21.01.2019
(51) Int. Cl.: G06F 15/167

(54) **SYSTÈME ET PROCÉDÉ DE PREDICTION D'UN PHÉNOMÈNE PHYSIQUE ET/OU CHIMIQUE AU MOYEN D'UN SEGMENT DE MÉMOIRE PARTAGÉ**
VORHERSAGESYSTEM UND -VERFAHREN EINES PHYSIKALISCHEN UND/ODER CHEMISCHEN PHÄNOMENS MITHILFE EINES GETEILTEN SPEICHERSEGMENTS
SYSTEM AND METHOD FOR PREDICTING A PHYSICAL AND/OR CHEMICAL PHENOMENON BY MEANS OF A SHARED MEMORY SEGMENT

(30) Priorité: 19.02.2018 FR 1851397
(43) Date de publication de la demande: 21.08.2019
(73) Titulaire: IFP Energies nouvelles, 92852 Rueil-Malmaison Cedex (FR)
(72) Inventeur: BOHBOT, Julien, 92852 Rueil-Malmaison cedex (FR); GILLET, Nicolas, 92852 Rueil-Malmaison cedex (FR); VELGHE, Anthony, 92852 Rueil-Malmaison cedex (FR)
(74) Mandataire: IFP Energies nouvelles

(56) Documents cités:
- EP-A1- 2 447 853
- EP-A1- 2 608 095
- EP-A2- 0 149 355
- EP-B1- 2 447 853
- WO-A1-2012/134557
- WO-A1-89/08886
- JP-A- S5 975 350
- US-A1- 2003 009 532
- ANONYMOUS: "General-purpose computing on graphics processing units - Wikipedia", 26 December 2017 (2017-12-26), pages 1 - 22, XP055915644, Retrieved from the Internet <URL:https://en.wikipedia.org/w/index.php?title=General-purpose_computing_on_graphics_processing_units&oldid=817103046> [retrieved on 20220426]
- HOEFLER TORSTEN ET AL: "MPI + MPI: a new hybrid approach to parallel programming with MPI plus shared memory", COMPUTING, SPRINGER, VIENNA, AT, vol. 95, no. 12, 19 May 2013 (2013-05-19), pages 1121 - 1136, XP035356310, ISSN: 0010-485X, [retrieved on 20130519], DOI: 10.1007/S00607-013-0324-2
- MESSAGE PASSING INTERFACE FORUM: "MPI: A Message-Passing Interface Standard", 21 September 2012 (2012-09-21), pages 403 - 472, XP055981578, Retrieved from the Internet <URL:https://www.mpi-forum.org/docs/mpi-3.0/mpi30-report.pdf> [retrieved on 20221115]
- J. BOHBOT ET AL: "IFP-C3D: an Unstructured Parallel Solver for Reactive Compressible Gas Flow with Spray", OIL & GAS SCIENCE AND TECHNOLOGY &NDASH; REVUE DE L&RSQUO;INSTITUT FRANÇAIS DU PÉTROLE, vol. 64, no. 3, 1 May 2009 (2009-05-01), pages 309 - 335, XP055043160, ISSN: 1294-4475, DOI: 10.2516/ogst/2009016

## Description

La présente invention concerne le domaine des systèmes et des procédés informatiques pour prédire un phénomène physico/chimique, en particulier pour prédire la combustion et les émissions de polluants d'un véhicule équipé d'un moteur à combustion interne.

Les contraintes économiques et environnementales sur la consommation de carburant et les émissions de polluants sont de plus en plus contraignantes pour les constructeurs automobiles. Par exemple, la norme EURO fixant la limite maximale des rejets de polluants des véhicules (CO₂, NOx, suies, particules et hydrocarbures imbrûlés) devient de plus en plus contraignante. Les constructeurs cherchent donc à optimiser leurs véhicules, dans le but de minimiser les émissions de polluants. Les simulations des émissions de polluants sont par conséquent de plus en plus utilisées afin de prévoir le comportement du moteur, sans avoir à réaliser de nombreuses et longues mesures expérimentales.

Afin de prédire l'émission des polluants des véhicules, la phase de post-oxydation (c'est-à-dire l'oxydation des gaz par une flamme de diffusion) dans la chambre de combustion peut être simulée grâce à une méthode de tabulation de la cinétique chimique de type FPI (Flame Prolongation of Intrinsic Low Dimensional Manifold pouvant être traduit par prolongation de la flamme dans le collecteur de faible dimension intrinsèque) ou un modèle de combustion ADF-PCM (« Approximated Diffusion Flames - Presumed Conditional Moment » pouvant être traduit par approximation de la diffusion des flammes - moment conditionnel présumé). Les tables de données numériques utilisées pour ce type de modèle peuvent être générées à partir d'un code informatique résolvant la cinétique chimique, par exemple le logiciel Chemkin ^{™}, développé par Reaction Design ou IFP-Kinetics ^{™}, développé par IFP Energies nouvelles, ou par des calculs de flamelettes pour la structure de la flamme pour les méthodes de type PCM. Cette tabulation détaille les quantités molaires de tous les composés chimiques présents dans une réaction, en fonction d'un schéma réactionnel donné et de conditions thermodynamiques. Puis, ces tables sont utilisées lors du calcul des émissions de polluants par un programme d'ordinateur, par exemple de type CFD (pour Computational Fluid Dynamics, pouvant être traduit par calcul de dynamique des fluides), notamment avec le logiciel IFP-C3D ^{®}, développé par IFP Energies Nouvelles.

Cependant, plusieurs inconvénients liés à ces méthodes de tabulations sont à noter. Afin de prendre en compte un ensemble de chemins thermodynamiques et de processus physico-chimiques, des variables d'entrées et de sorties supplémentaires doivent être introduites dans les tables. Ce nombre de paramètres croissants entraine une augmentation de la taille des tables physico-chimiques qui peut vite devenir incompatible avec la capacité mémoire des machines informatiques de calcul dès lors que le modèle est implanté dans un solveur parallèle utilisant le paradigme MPI (Message Passing Interface : interface de passage de message). L'utilisation de ce paradigme à mémoire distribuée organise les communications autour d'envoi et de réception de messages entre processus. Les zones de mémoire des processus sont exclusives et segmentées dans la mémoire vive RAM. Les tables physico/chimiques ont des dimensions importantes, et peuvent représenter plusieurs Go. Par exemple, une table générée pour le modèle PCM excède les 3.5 Go de données.

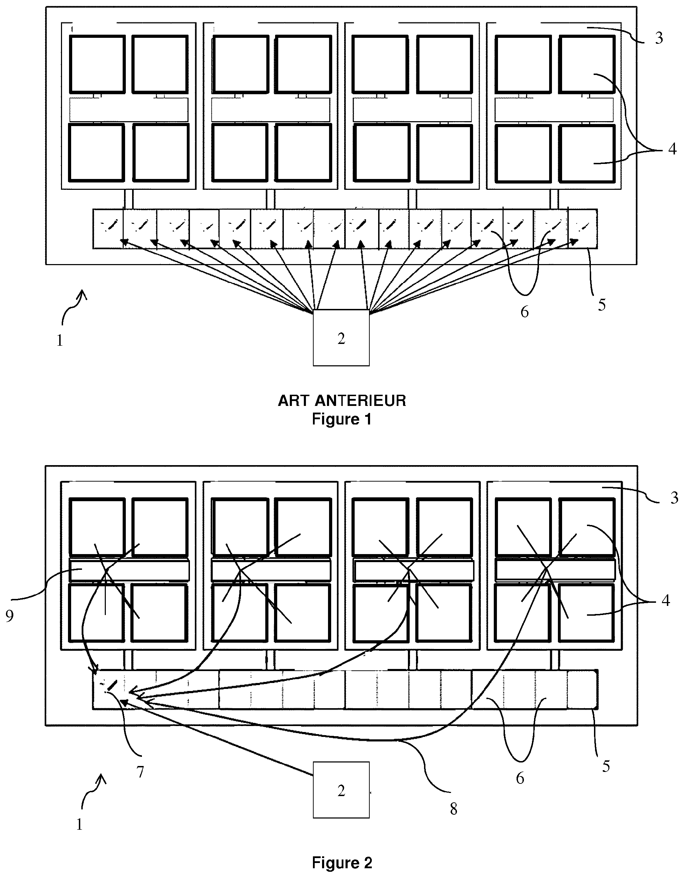

La figure 1 détaille, schématiquement, un tel fonctionnement selon cet art antérieur. Un système informatique 1 comporte une pluralité (ici quatre) de processeurs 3 et une mémoire vive 5. Chaque processeur 3 est du type multi-cœurs : selon l'exemple représenté, chaque processeur 3 comporte quatre cœurs de calculs 4. La mémoire vive 5 comporte une pluralité de segments de mémoire 6 (dans le cas représenté seize segments). On appelle segment une zone de mémoire de la mémoire vive (flèches rectilignes). Pour cette configuration, la table 2 est allouée dans chaque segment 6 de la mémoire vive. Les cœurs 4 de chaque processeur 3 sont prévus pour réaliser des calculs en parallèle. Pour cela, chaque cœur 4 vient lire dans un segment 6 qui lui est propre les données stockées dans la table 2.

Pour le fonctionnement de la figure 1, la table est allouée dans chaque segment de chaque processus parallèle. Ainsi, le système informatique nécessite une mémoire vive de grande capacité, et nécessite une forte consommation de cette mémoire vive. Il est à noter que l'évolution prévue des machines de calculs intensifs ne permettra pas d'éliminer ce problème de stockage. En effet, les projections des constructeurs sur l'évolution des machines de calculs vont vers un nombre croissant de cœurs de calculs à faible quantité de mémoire par processeurs, ainsi qu'une augmentation relativement faible du nombre de processeurs par nœuds de calcul. Ce type d'architecture est préconisé afin de réduire la consommation électrique des futurs calculateurs.

Actuellement, lors d'une simulation parallèle ayant recours à une méthode de tabulation, chaque processus va charger en mémoire la totalité de la table. Par exemple, une simulation sur un nœud composé d'un processeur contenant huit cœurs de calcul chargera huit tables de données (processus) de plusieurs giga-octets (par exemple 3,5 Go) de données liées à la lecture de la table. Cette surcharge de mémoire va limiter considérablement la mémoire restante pour charger le maillage et les autres tableaux alloués au cours de la simulation.

Un problème similaire peut se rencontrer dans d'autres domaines de simulation de phénomènes physique et/ou chimique, en particulier dans le domaine des simulations d'écoulements réactifs de fluide complexe (industrie nucléaire, procédé énergétique...).

La demande de brevet WO 2012/134557 A1 décrit une méthode et un dispositif pour partager une mémoire.

La demande de brevet US 2003/0009532 A1 décrit un système multiprocesseurs avec une mémoire partagée.

La demande de brevet EP 0149355 A2 décrit une architecture informatique avec une mémoire principale.

La demande de brevet EP 2447853 A1 décrit un multiprocesseur avec une mémoire propre et une mémoire partagée.

Le document : « HOEFLER Torsten et al. : « MPI + MPI: a new hybrid approach to parallel programming with MPI plus shared memory », COMPUTING, SPRINGER, Vienna, AT, vol. 95, no. 12, 19 mai 2013, pages 1121-1136 » décrit une approche de parallélisation avec une interface MPI.

La demande de brevet EP26080095 décrit un système et un procédé de prédiction des émissions de polluants d'un véhicule avec calculs simultanés de la cinétique chimique et des émissions.

Le document : « Message Passing Interface Forurm : MPI : A Message-Passing Interface Standard », 21 septembre 2012, pages 403-472 » décrit une approche de parallélisation avec une interface MPI.

Le document : « J. BOHBOT et al. : « IFP-C3D : an unstructured parallel solver for reactive compressible gas flow with spray », oil & gas science technology ; revue de l'institut français du pétrole, vol. 64, no. 3, 1 mai 2009, pages 309-335 » décrit le logiciel IFP-C3D développé par IFP Energies nouvelles.

Afin de contourner ce problème, la présente invention concerne un système et un procédé de prédiction (simulation) permettant de réduire de manière drastique la consommation mémoire par une utilisation d'un unique segment de mémoire vive dit "partagé" entre tous les cœurs parallèles.

### Le système et le procédé selon l'invention

La présente invention concerne un système informatique de prédiction d'un phénomène physique et/ou chimique, comprenant une pluralité de processeurs multi-cœurs pour des calculs en parallèle et une mémoire vive comportant une pluralité de segments de mémoire, ladite prédiction dudit phénomène physique et/ou chimique étant mise en œuvre au moyen de calculs réalisés à partir d'au moins une table stockant des données numériques. Ladite mémoire vive comprend un unique segment partagé dans lequel est stockée ladite table de données numériques, et en ce que chaque cœur de chaque processeur est configuré pour communiquer avec ledit segment partagé de manière à lire ladite table de données numériques pour réaliser lesdits calculs pour la prédiction dudit phénomène physique et/ou chimique.

Avantageusement, ledit phénomène physique et/ou chimique est un phénomène de combustion et d'émissions de polluants d'un véhicule équipé d'un moteur à combustion interne.

Selon un mode de réalisation, ladite table de données numériques est générée à partir d'un code de cinétique chimique et/ou à partir de calculs de flamelettes pour la structure d'une flamme.

Conformément à une mise en œuvre, chaque cœur de chaque processeur est configuré pour lire ladite table de données numériques dudit segment partagé au moyen d'un interface de passage de message MPI.

De manière avantageuse, ledit système comprend des moyens de parallélisation desdits calculs entre lesdits processeurs et/ou lesdits cœurs desdits processeurs.

Selon un aspect, lesdits processeurs sont configurés pour exécuter des codes de calcul de dynamique des fluides pour la prédiction dudit phénomène physique et/ou chimique.

En outre, l'invention concerne un procédé de prédiction d'un phénomène physique et/ou chimique, au moyen d'un système informatique selon l'une des caractéristiques précédentes et d'une table de données numériques stockant des données utilisées pour la prédiction dudit phénomène physique et/ou chimique. Pour ce procédé, on met en œuvre les étapes suivantes :
a) on alloue ladite table de données numériques à un unique segment partagé de ladite mémoire vive ; et
b) on prédit ledit phénomène physique et/ou chimique en exécutant des calculs physiques et/ou chimiques sur une pluralité de cœurs de ladite pluralité de processeurs dudit système au moyen de ladite table de données numériques, chaque cœur communiquant avec ledit segment partagé pour lire ladite table.

Avantageusement, ledit phénomène physique et/ou chimique est un phénomène de combustion et d'émissions de polluants d'un véhicule équipé d'un moteur à combustion interne.

Selon un mode de réalisation, ledit procédé comporte une étape préalable de génération de ladite table de données numériques à partir d'un code de cinétique chimique et/ou à partir d'un code de calculs de flamelettes pour la structure d'une flamme.

Conformément à une mise en œuvre, on attribue un identifiant audit segment partagé, on envoie ledit identifiant auxdits cœurs desdits processeurs, et on associe un pointeur depuis lesdits processeurs vers ledit segment partagé au moyen dudit identifiant.

Selon un aspect, on exécute des calculs de dynamique des fluides sur lesdits cœurs desdits processeurs pour la prédiction dudit phénomène physique et/ou chimique.

De manière avantageuse, on exécute lesdits calculs physique et/ou chimique en parallèle entre lesdites processeurs et/ou lesdits cœurs.

De préférence, lesdits cœurs lisent ladite table de données numériques sur ledit segment partagé au moyen d'une fonction MPI.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1, déjà décrite, illustre un système informatique selon l'art antérieur.
La figure 2 illustre un système informatique selon un mode de réalisation de l'invention.
La figure 3 est un histogramme représentant la mémoire utilisée pour un exemple avec le système sur l'art antérieur.
La figure 4 est un histogramme représentant la mémoire utilisée pour le même exemple que la figure 3 avec le système informatique selon un mode de réalisation de l'invention.

### Description détaillée de l'invention

La présente invention concerne un système informatique de prédiction (simulation) d'un phénomène physique et/ou chimique. La prédiction (simulation) est réalisée par des calculs mis en œuvre sur des processeurs multi-cœurs. De plus, la prédiction utilise une mémoire vive (RAM de l'anglais Random Access Memory) pour stocker des données. Ces calculs utilisent au moins une table stockant des données numériques.

Le système informatique défini dans l'invention est également appelé nœud de calcul. Il peut s'agir d'un nœud de calcul d'un supercalculateur, c'est-à-dire une partie d'un supercalculateur. Ainsi, un supercalculateur peut être formé par un ensemble de systèmes informatiques selon l'invention.

Un processeur multi-cœur est un processeur possédant plusieurs cœurs physiques de calculs fonctionnant simultanément. Il se distingue d'architectures plus anciennes où un processeur unique commandait plusieurs circuits de calcul simultanés.

Un cœur physique de calcul est un ensemble de circuits capables d'exécuter des programmes de façon autonome. Toutes les fonctionnalités nécessaires à l'exécution d'un programme sont présentes dans ces cœurs : compteur ordinal, registres, unités de calcul, etc. De plus, des caches sont définis pour chaque processeur ou partagés entre eux.

La mémoire vive est la mémoire informatique dans laquelle peuvent être stockées, puis effacées, les informations traitées par un appareil informatique. La mémoire vive comporte plusieurs zones de stockage appelés segments de mémoire. Selon certaines configurations existantes et tel qu'illustré à la figure 1, un seul segment de mémoire peut être associé à un seul cœur des processeurs.

La table est une matrice regroupant des données numériques. Ces données peuvent être issues de précédents calculs informatiques. Selon un exemple de réalisation, les précédents calculs informatiques peuvent avoir été réalisés sur les mêmes processeurs.

Selon l'invention, la mémoire vive comprend un unique segment de mémoire partagé dans lequel est stockée la table de données numériques, les autres segments de la mémoire vive ne stockent pas la table de données numériques. De plus, chaque cœur de chaque processeur est configuré pour communiquer avec le segment partagé de manière à lire ladite table de données numériques pour réaliser les calculs pour la prédiction du phénomène physique et/ou chimique. En d'autres termes, seul un des segments de mémoire de la mémoire vive est utilisée pour stocker la table de données numériques, et tous les cœurs lisent la table de données numériques dans le segment de mémoire partagé.

L'invention permet la réduction de la consommation de mémoire des processus logiciels, et permet a fortiori d'augmenter la capacité de mémoire vive disponible. En effet, l'invention permet de réaliser une prédiction (simulation) d'un phénomène physique et/ou chimique en limitant l'utilisation de la mémoire vive à un seul segment de mémoire partagé. L'invention permet une adaptation à des tables de données numériques de plus en plus importantes, et elle permet également une adaptation aux processeurs ayant une faible consommation électrique (avec des cœurs de calculs à faible quantité de mémoire par processeur). De plus, cette limitation de la charge de la mémoire permet de libérer de la mémoire pour charger le maillage et les autres tableaux alloués au cours de la simulation.

En particulier, l'invention concerne l'utilisation de tables chimiques et/ou physiques de grandes tailles sur des machines parallèles à mémoire distribuée. Dans ce cas, l'invention permet la réduction de la consommation de mémoire pour des processus logiciels parallélisés sur des calculateurs constitués de nœuds de calculs basés sur des processeurs multi-cœurs lors de l'utilisation de tables physico-chimiques de grandes dimensions.

De préférence, l'invention concerne la prédiction de la combustion et des émissions de polluants d'un véhicule équipé d'un moteur à combustion interne. En effet, cette application utilise des tables de grandes dimensions (de plusieurs Giga-octets par exemple pour des tables générées à partir d'un code informatique résolvant la cinétique chimique, ou par des calculs de flamelettes pour la structure de la flamme pour les méthodes de type PCM), pour réaliser des calculs de dynamique des fluides.

Toutefois, l'invention est adaptée à toute prédiction (simulation) nécessitant au moins une table chimique et/ou physique de grande taille, par exemple dans le domaine des écoulements réactifs de fluide complexe (industrie nucléaire, procédé énergétique...)...

Selon un mode de réalisation de l'invention, une table de données numériques peut être générée à partir d'un code de cinétique chimique, tel que le logiciel logiciel Chemkin ^{™}, développé par Reaction Design ou IFP-Kinetics ^{™}, développé par IFP Energies nouvelles. Ces logiciels sont aptes à résoudre un nombre important de combinaisons de réactions chimiques dans le but de comprendre un problème complexe, et sont donc adaptés par exemple à la problématique des émissions polluantes.

Alternativement ou additionnellement, une table de données peut être générée à partir de calculs de flamelettes pour la structure de la flamme pour les méthodes de type PCM.

Conformément à une mise en œuvre de l'invention, les processeurs peuvent être configurés pour exécuter des codes de calcul de dynamique des fluides (CFD) pour la prédiction du phénomène physique et/ou chimique. Ces codes permettent notamment de simuler la combustion et les émissions d'un véhicule équipé d'un moteur à combustion interne à partir de table de données numériques issues d'un code de cinétique chimique et/ou d'un code de calculs de flamelettes.

Le logiciel IFP-C3D ^{®}, développé par IFP Energies Nouvelles, est un exemple de logiciel de CFD ayant une application pour la simulation tridimensionnelle (3D) des écoulements diphasiques (gaz / carburant liquide) réactifs dans les moteurs à combustion interne. Ce logiciel permet d'analyser les phénomènes physiques complexes se produisant dans les moteurs (balayage lié au croisement de soupapes, formation de film liquide sur les parois, formation de polluants ...).

Selon un aspect de l'invention, le système peut comprendre des moyens de parallélisation des calculs entre les processeurs et/ou entre les cœurs. De cette manière, les calculs, et donc les prédictions (simulations) des phénomènes physique et/ou chimique sont plus rapides, ce qui permet de réduire la durée d'utilisation des processeurs et de la mémoire vive. Ces moyens de parallélisation peuvent utiliser l'interface de passage des messages MPI (Message Passing Interface).

L'interface de passage des messages MPI est une norme définissant une bibliothèque de fonctions, utilisable avec les langages C et Fortran. Elle permet d'exploiter des ordinateurs distants ou multiprocesseurs par passage de messages. Cette technique est couramment utilisée pour l'exécution de programmes parallèles sur des systèmes à mémoire distribuée.

Cette interface MPI présente l'avantage d'obtenir de bonnes performances aussi bien sur des machines massivement parallèles à mémoire partagée que sur des ensembles d'ordinateurs hétérogènes à mémoire distribuée. En outre, elle est disponible sur de très nombreux matériels et systèmes d'exploitation. Ainsi, l'interface MPI possède l'avantage par rapport aux autres bibliothèques de passage de messages d'être grandement portable, car l'interface MPI a été implantée sur presque toutes les architectures de mémoires et est rapide car chaque implantation a été optimisée pour le matériel sur lequel il s'exécute.

Avantageusement, chaque cœur de chaque processeur peut être configuré pour lire la table du segment partagé, au moyen d'un interface de passage de message MPI.

La figure 2 représente, schématiquement et de manière non limitative, un système informatique selon un mode de réalisation de l'invention. La figure 2 est une représentation similaire à la figure 1. Un système informatique 1 comporte une pluralité (ici quatre) de processeurs 3 et une mémoire vive 5. Chaque processeur 3 est du type multi-cœurs : selon l'exemple représenté chaque processeur 3 comporte quatre cœurs 4 et un cache 9. La mémoire vive 5 comporte une pluralité de segments 6 (dans le cas représenté seize segments). On appelle segment une zone de mémoire de la mémoire vive. Pour cette configuration, la table 2 est allouée à un unique segment partagé 7 de la mémoire vive (flèche rectiligne). Les cœurs 4 de chaque processeur 3 sont prévus pour réaliser des calculs en parallèle. Pour cela, chaque cœur 4 vient lire dans le segment partagé 7 les données stockées dans la table 2. Chaque cache 9 de chaque processeur 3 comporte un pointeur 8 qui est configuré pour lire la table 2 dans le segment partagé 7. Au sein de chaque processeur 3, les cœurs 4 récupèrent les données dans le cache 9 issues du segment partagé 7 par le pointeur 8 (flèches courbes).

En outre, l'invention concerne un procédé de prédiction (simulation) d'un phénomène physique et/ou chimique. Le procédé met en œuvre un système informatique (nœud de calculs) selon l'une quelconque des combinaison de variantes décrites ci-dessus. De plus, le procédé de prédiction utilise une table stockant des données numériques.

Pour ce procédé, on met en œuvre les étapes suivantes :
a) on alloue la table de données numériques à un unique segment de mémoire de la mémoire vive du système informatique ; et
b) on prédit (simule) ledit phénomène physique et/ou chimique en exécutant des calculs physiques et/ou chimiques sur une pluralité de cœurs de la pluralité de processeurs du système informatique au moyen de la table de données, pour cela, chaque cœur de chaque processeur communique avec le segment partagé pour lire la table de données numériques.

Ainsi, le procédé selon l'invention permet de réaliser une prédiction (simulation) d'un phénomène physique et/ou chimique en limitant l'utilisation de la mémoire vive à un seul segment de mémoire.

De préférence, le procédé selon l'invention concerne la prédiction (simulation) de la combustion et des émissions de polluants d'un véhicule équipé d'un moteur à combustion interne. En effet, cette application utilise des tables de grandes dimensions (de plusieurs Giga-octets par exemple pour des tables générées à partir d'un code informatique résolvant la cinétique chimique, ou par des calculs de flamelettes pour la structure de la flamme pour les méthodes de type PCM), pour réaliser des calculs de dynamique des fluide.

Toutefois, le procédé selon l'invention est adapté à toute prédiction (simulation) nécessitant au moins une table chimique et/ou physique de grande taille, par exemple dans le domaine des écoulements réactifs de fluide complexe (industrie nucléaire, procédé énergétique...).

Selon un mode de réalisation de l'invention, le procédé peut comporter une étape préalable de génération de la table de données à partir d'un code du cinétique chimique, tel que le logiciel logiciel Chemkin ^{™}, développé par Reaction Design ou IFP-Kinetics ^{™}, développé par IFP Energies nouvelles.

Alternativement ou additionnellement, le procédé peut comporter une étape préalable de génération de la table de données à partir de calculs de flamelettes pour la structure de la flamme pour les méthodes de type PCM.

Conformément à une mise en œuvre de l'invention, on peut exécuter des codes de calcul de dynamique des fluides (CFD) pour l'étape b) de prédiction du phénomène physique et/ou chimique. Ces codes permettent notamment de simuler la combustion et les émissions d'un véhicule équipé d'un moteur à combustion interne.

Selon un aspect de l'invention, on peut exécuter les calculs physique et/ou chimique en parallèle entre les différents processeurs et/ou entre les différents cœurs. De cette manière, les calculs, et donc les prédictions du phénomène physique et/ou chimique sont plus rapides, ce qui permet de réduire la durée d'utilisation des processeurs et de la mémoire vive. Cette parallélisation peut être mise en œuvre au moyen de l'interface de passage des messages MPI (Message Passing Interface).

Avantageusement, chaque cœur de chaque processeur peut être configuré pour lire la table dans le segment partagé, au moyen d'un interface de passage de message MPI.

Conformément à une caractéristique de l'invention, le procédé peut comporter les étapes suivantes préalablement à l'étape b) de prédiction du phénomène physique et/ou chimique :
- on attribue un identifiant au segment partagé ;
- on envoie ledit identifiant aux cœurs des processeurs ;
- on associe un pointeur depuis les processeurs (depuis le cache de chaque processeur) vers le segment de mémoire partagé au moyen de l'identifiant attribué au segment partagé.

Ces étapes peuvent être mises en œuvre par au moins un cœur de processeur, considéré comme un cœur de processeur « maître ».

Ces étapes permettent d'associer, de manière simple, les processeurs avec le segment de mémoire partagé, le pointeur étant ensuite utilisé pour la lecture de la table de données numériques par les cœurs de processeurs.

Le système et le procédé selon l'invention peuvent fonctionner avec tout type de système d'exploitation, par exemple Windows ^{™}, UNIX ^{™}, et IOS ^{™}.

### Exemple d'algorithme pour la mise en œuvre de l'invention

L'algorithme ci-dessous décrit, de manière non limitative, une mise en œuvre de l'invention dans un code de calcul sur un OS LINUX.

Suite à l'exécution parallèle du simulateur, l'initialisation mémoire de chaque processus doit être réalisé, il convient au préalable de :
1 - Calculer l'affinité des processus afin d'associer chaque processus parallèles aux nœuds de calcul (systèmes informatiques) où ils sont effectuées.

Pour chaque groupe de processus, un processus sera considéré comme « maitre » (un des cœurs de processeur est considéré comme maître pour réaliser l'allocation de mémoire).

2- Pour chaque groupe de processus exécuté sur le même nœud de calcul, mettre en œuvre les étapes suivantes :

### Sur le processus maitre du groupe :

2.1 - Création d'un segment de mémoire partagée par le processus maitre authentifiée à l'aide d'une clé unique nommée CLEID.

2.2 - Allocation d'une zone mémoire (utilisation de la fonction d'allocation mémoire C, fonction intégrée au noyau C).

2.3 - Association de la zone mémoire avec le segment de mémoire partagée authentifiée CLEID via l'utilisation de la fonction shmmat (fonction intégrée au noyau C) par le processus « maitre »

2.4 - Partage à tous les autres processus du groupe de la valeur de CLEID.

### Pour les autres processus de chaque groupe non « maitre »,

2.5 - Réception de la clé d'authentification CLEID venant du maitre.

2.6 - Récupération de l'adresse du segment mémoire partagé via l'utilisation de la fonction shmget (fonction intégrée au noyau C).

2.7 - Association d'un pointeur C (non allouée) vers le segment de mémoire partagée.

### 3- Lecture / Ecriture table :

3.1 - Chaque processus maitre de chaque groupe lit et met en mémoire la table physico-chimique.

3.2 - Chaque processus non maître lit les valeurs de la table en utilisant le pointeur local qui pointe vers le segment partagé.

### Exemples comparatifs

Les caractéristiques et avantages de l'invention ressortiront des exemples comparatifs décrits ci-dessous.

Dans le tableau 1, on estime la réduction de mémoire obtenue par l'invention par rapport à l'utilisation selon l'art antérieur (illustrée en figure 1) en fonction des différentes architectures réelles de supercalculateurs intensivement parallèles. Dans le tableau 1, le facteur de gain correspond au ratio de la consommation en mémoire utilisée par un système selon l'art antérieur (allocation de la table de données dans chaque segment de la mémoire vive) par rapport à la consommation en mémoire utilisée par le système et le procédé selon l'invention (allocation de la table de données numériques dans un unique segment partagé de la mémoire vive).

**Tableau 1 - Facteur de gain de mémoire pour des nœuds de calcul**

| N° Exemple | Caractéristique nœuds de calcul | Facteur de gain |
|---|---|---|
| 1 | 2 Processeurs octo-cœurs Intel^{®} Sandy Bridge EP | 16 |
| 2 | 16 Processeurs octo-cœurs Intel^{®} Xeon | 128 |
| 3 | Processeur Intel^{®} Xeon^{®} E5-2680 v4 | 28 |
| 4 | 4 processeurs Intel^{®} Sandy Bridge | 32 |
| 5 | 2 processeurs octo-coeurs AMD Opteron^{®} | 16 |

La réduction de la consommation mémoire est fonction de l'architecture de la machine. On remarque, que le système et le procédé selon l'invention permettent un facteur de gain de mémoire important (variant de 16 à 128).

Cependant, pour les machines exa-flopiques le nombre de cœurs par nœuds de calcul pourra dépasser 256 (8 processeurs de 32 cœurs) et 1024 cœurs à l'horizon 2020 (8 processeurs de 128 cœurs), ce qui augmentera le facteur de gain (respectivement à 256 et 1024).

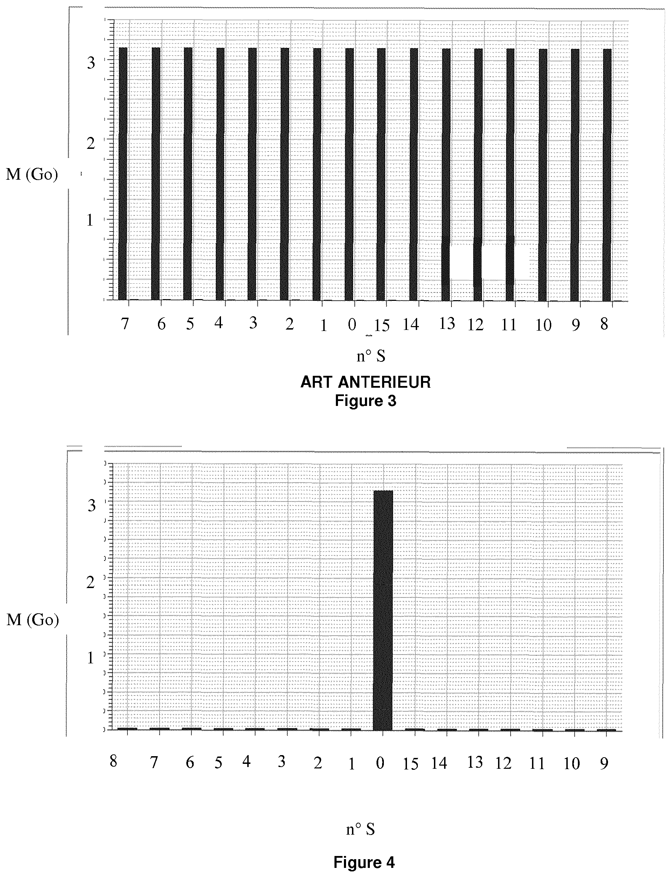

On a représenté en figures 3 et 4, pour l'exemple n° 3 du tableau 1 (nœud de calcul avec 2 Processeurs octo-cœurs Intel Sandy Bridge ^{®}), la mémoire utilisée pour une table de 3,2 Go. La figure 3 correspond à l'utilisation de la mémoire au moyen d'un système et un procédé selon l'art antérieur (allocation de la table dans chaque segment de mémoire) et la figure 4 correspond à l'utilisation de la mémoire au moyen d'un système et un procédé selon l'invention (allocation de la table dans un unique segment de mémoire).

Les figures 3 et 4 sont des histogrammes, qui représentent en abscisse le numéro du segment n° S de la mémoire vive. Les segments de mémoire vive sont numérotés de 0 à 15. L'ordonnée des figures 3 et 4 correspond à la mémoire utilisée M en Go. On observe l'utilisation de 3,2 Go de mémoire sur chacun des segments de mémoire pour le procédé selon l'art antérieur (figure 3). Au contraire, seul un segment de mémoire est utilisé pour le procédé selon l'invention (figure 4).

Ces figures illustrent bien le gain de mémoire utilisée grâce à l'invention, ce qui permet de limiter la capacité de la mémoire vive.

## Revendications

1. Système informatique de simulation d'un phénomène de combustion et d'émissions de polluants d'un véhicule équipé d'un moteur à combustion interne, comprenant une pluralité de processeurs (3) multi-cœurs (4) pour des calculs en parallèle et une mémoire vive (5) comportant une pluralité de segments (6) de mémoire (4), ladite simulation dudit phénomène de combustion et d'émissions de polluants d'un véhicule étant mise en œuvre au moyen de calculs réalisés à partir d'au moins une table (2) stockant des données numériques générées à partir d'un code de cinétique chimique ou à partir de calculs de flamelettes pour la structure d'une flamme, **caractérisé en ce que** ladite mémoire vive (5) comprend un unique segment partagé (7) dans lequel est stockée ladite table de données numériques (2), **en ce que** chaque cœur (4) de chaque processeur (3) est configuré pour communiquer avec ledit segment partagé (7) de manière à lire ladite table de données numériques (2) pour exécuter des codes de calculs de dynamique des fluides pour la simulation d'un phénomène de combustion et d'émissions de polluants d'un véhicule équipé d'un moteur à combustion interne, **en ce que** ledit système comprend des moyens de parallélisation desdits calculs de simulation de dynamique des fluides entre lesdits processeurs (3) et/ou lesdits cœurs (4) desdits processeurs (3), et **en ce que** chaque cœur (4) de chaque processeur (3) est configuré pour lire ladite table de données numériques (2) dudit segment partagé (7) au moyen d'une interface de passage de message MPI.

2. Procédé de simulation d'un phénomène de combustion et d'émissions de polluants d'un véhicule équipé d'un moteur à combustion interne, au moyen d'un système informatique selon la revendication 1 et d'une table de données numériques (2) stockant des données utilisées pour la simulation d'un phénomène de combustion et d'émissions de polluants d'un véhicule équipé d'un moteur à combustion interne, **caractérisé en ce qu'**on met en œuvre les étapes suivantes :
a) on alloue ladite table de données numériques (2) générées à partir d'un code de cinétique chimique ou à partir de calculs de flamelettes pour la structure d'une flamme à un unique segment partagé (7) de ladite mémoire vive (5) ; et
b) on simule ledit phénomène de combustion et d'émissions de polluants d'un véhicule équipé d'un moteur à combustion interne en exécutant des codes de calculs de dynamique des fluides sur une pluralité de cœurs (4) de ladite pluralité de processeurs (3) dudit système au moyen de ladite table de données numériques (2), chaque cœur (4) communiquant avec ledit segment partagé (7) pour lire ladite table, en exécutant lesdits calculs de simulation de dynamique des fluides en parallèle entre lesdites processeurs (3) et/ou lesdits cœurs (4), et chaque cœur (4) lisant ladite table de données numériques (2) sur ledit segment partagé (7) au moyen d'une fonction MPI.

3. Procédé selon la revendication 2, dans lequel on attribue un identifiant audit segment partagé (7), on envoie ledit identifiant auxdits cœurs desdits processeurs, et on associe un pointeur (8) depuis lesdits processeurs (3) vers ledit segment partagé (7) au moyen dudit identifiant.

4. Procédé selon la revendication 3, dans lequel on considère au moins un cœur de processeur comme un cœur de processeur maître, et dans lequel le cœur de processeur maître met en œuvre les étapes d'attribution dudit identifiant dudit segment partagé (7), d'envoi dudit identifiant auxdits cœurs desdits processeurs (3), et d'association dudit pointeur (8) depuis lesdits processeurs (3) vers ledit segment partagé (7) au moyen dudit identifiant.

## Patentansprüche

1. Computersystem zur Simulation eines Phänomens der Verbrennung und der Schadstoffemissionen eines mit einem Verbrennungsmotor ausgestatteten Fahrzeugs mit einer Vielzahl von Prozessoren (3) mit mehreren Kernen (4) für parallele Berechnungen und einem Arbeitsspeicher (5) mit einer Vielzahl von Speicher-(4)-Segmenten (6), wobei die Simulation des Phänomens der Verbrennung und der Schadstoffemissionen eines Fahrzeugs mithilfe von Berechnungen durchgeführt wird, die ausgehend von mindestens einer Tabelle (2) durchgeführt werden, die digitale Daten speichert, die ausgehend von einem Code der chemischen Kinetik oder ausgehend von Flamelet-Berechnungen für die Struktur einer Flamme erzeugt werden, **dadurch gekennzeichnet, dass** der Arbeitsspeicher (5) ein einzelnes gemeinsam genutzten Segment (7) aufweist, in dem die digitale Datentabelle (2) gespeichert ist, dass jeder Kern (4) jedes Prozessors (3) so konfiguriert ist, dass er mit dem gemeinsam genutzten Segment (7) kommuniziert, um die digitale Datentabelle (2) zu lesen, um Fluiddynamik-Berechnungscodes für die Simulation eines Phänomens der Verbrennung und der Schadstoffemissionen eines mit einem Verbrennungsmotor ausgestatteten Fahrzeugs auszuführen, dass das System Mittel zur Parallelisierung der Berechnungen zur Simulation der Fluiddynamik zwischen den Prozessoren (3) und/oder den Kernen (4) der Prozessoren (3) aufweist und dass jeder Kern (4) jedes Prozessors (3) so konfiguriert ist, dass er die digitale Datentabelle (2) aus dem gemeinsam genutzten Segment (7) mithilfe einer MPI-Nachrichtenübergabe-Schnittstelle liest.

2. Verfahren zur Simulation eines Phänomens der Verbrennung und der Schadstoffemissionen eines mit einem Verbrennungsmotor ausgestatteten Fahrzeugs mithilfe eines Computersystems nach Anspruch 1 und einer digitalen Datentabelle (2), die Daten speichert, die für die Simulation eines Phänomens der Verbrennung und der Schadstoffemissionen eines mit einem Verbrennungsmotor ausgestatteten Fahrzeugs verwendet werden, **dadurch gekennzeichnet, dass** die folgenden Schritte durchgeführt werden:
a) die digitale Datentabelle (2), die aus einem Code für chemische Kinetik oder aus Flamelet-Berechnungen für die Struktur einer Flamme erzeugt wird, wird einem einzelnen gemeinsam genutzten Segment (7) des Arbeitsspeichers (5) zugewiesen und
b) das Phänomen der Verbrennung und der Schadstoffemissionen eines mit einem Verbrennungsmotor ausgestatteten Fahrzeugs wird simuliert, indem Fluiddynamik-Berechnungscodes auf einer Vielzahl von Kernen (4) der Vielzahl von Prozessoren (3) des Systems mithilfe der digitalen Datentabelle (2) ausgeführt werden, wobei jeder Kern (4) mit dem gemeinsam genutzten Segment (7) kommuniziert, um die Tabelle zu lesen, indem die Fluiddynamik-Simulationsberechnungen parallel zwischen den Prozessoren (3) und/oder den Kernen (4) ausgeführt werden, und wobei jeder Kern (4) die digitale Datentabelle (2) auf dem gemeinsam genutzten Segment (7) mithilfe einer MPI-Funktion liest.

3. Verfahren nach Anspruch 2, wobei dem gemeinsam genutzten Segment (7) eine Kennung zugewiesen wird, die Kennung zu den Kernen der Prozessoren gesendet wird und mithilfe der Kennung ein Zeiger (8) von den Prozessoren (3) dem gemeinsam genutzten Segment (7) zugeordnet wird.

4. Verfahren nach Anspruch 3, wobei mindestens ein Prozessorkern als Master-Prozessorkern betrachtet wird und wobei der Master-Prozessorkern die Schritte des Zuweisens der Kennung des gemeinsam genutzten Segments (7), des Sendens der Kennung an die Prozessorkerne der Prozessoren (3) und des Zuordnens des Zeigers (8) von den Prozessoren (3) zu dem gemeinsam genutzten Segment (7) mithilfe der Kennung durchführt.

## Claims

1. Computer system for simulating a combustion and pollutant emission phenomenon of a vehicle fitted with an internal combustion engine, comprising a plurality of multicore (4) processors (3) for parallel computations and a random-access memory (5) including a plurality of memory (4) segments (6), said simulation of said combustion and pollutant emission phenomenon of a vehicle being made by means of computations performed on the basis of at least one table (2) storing numerical data generated on the basis of a chemical kinetics code or on the basis of flamelet computations for the structure of a flame, **characterized in that** said random-access memory (5) comprises a single shared segment (7) in which said table of numerical data (2) is stored, **in that** each core (4) of each processor (3) is configured to communicate with said shared segment (7) so as to read said table of numerical data (2) in order to run computational fluid dynamics codes for simulating a combustion and pollutant emission phenomenon of a vehicle fitted with an internal combustion engine, **in that** said system comprises means for parallelizing said fluid dynamics simulation computations between said processors (3) and/or said cores (4) of said processors (3), and **in that** each core (4) of each processor (3) is configured to read said table of numerical data (2) of said shared segment (7) by means of a message-passing interface MPI.

2. Method for simulating a combustion and pollutant emission phenomenon of a vehicle fitted with an internal combustion engine, by means of a computer system according to Claim 1 and a table of numerical data (2) storing data that are used to simulate a combustion and pollutant emission phenomenon of a vehicle fitted with an internal combustion engine, **characterized in that** the following steps are implemented:
a) said table of numerical data (2) generated on the basis of a chemical kinetics code or on the basis of flamelet computations for the structure of a flame is allocated to a single shared segment (7) of said random-access memory (5); and
b) said combustion and pollutant emission phenomenon of a vehicle fitted with an internal combustion engine is simulated by running computational fluid dynamics codes on a plurality of cores (4) of said plurality of processors (3) of said system by means of said table of numerical data (2), each core (4) communicating with said shared segment (7) so as to read said table, by running said fluid dynamics simulation computations in parallel between said processors (3) and/or said cores (4), and each core (4) reading said table of numerical data (2) of said shared segment (7) by means of an MPI function.

3. Method according to Claim 2, wherein an identifier is allocated to said shared segment (7), said identifier is sent to said cores of said processors, and a pointer (8) from said processors (3) to said shared segment (7) is assigned by means of said identifier.

4. Method according to Claim 3, wherein at least one processor core is considered to be a master processor core, and wherein the master processor core implements the steps of allocating said identifier of said shared segment (7), sending said identifier to said cores of said processors (3), and assigning said pointer (8) from said processors (3) to said shared segment (7) by means of said identifier.
